# EUROPEAN PATENT SPECIFICATION

(11) **EP 1 704 664 B1**
(45) Date of publication and mention of the grant of the patent: **23.10.2013**
(21) Application number: 05704480.2
(22) Date of filing: 10.01.2005
(51) Int. Cl.: H04W 36/00, H04B 7/02

(54) **PACKET TRANSMISSION METHOD**
PAKETÜBERTRAGUNGSVERFAHREN
PROCEDE DE TRANSMISSION PAR PAQUETS

(30) Priority: 09.01.2004 KR 2004001608; 16.01.2004 US 536839 P; 20.01.2004 US 536984 P
(43) Date of publication of application: 27.09.2006
(73) Proprietor: LG Electronics Inc., Seoul 150-721 (KR)
(72) Inventor: KIM, Hak Seong, Dongjak-gu, Seoul 156-833 (KR); WON, Seung Hwan, Gyeonggi-do 427-732 (KR); AHN, Joon Kui, Dongjak-gu, Seoul 156-781 (KR)
(74) Representative: Ter Meer Steinmeister & Partner
(86) International application number: PCT/KR2005/000072
(87) International publication number: WO 2005/065062

(56) References cited:
- EP-A1- 1 326 361
- EP-A1- 1 326 361
- WO-A1-02/47317
- WO-A1-02/47317
- US-A1- 2003 152 031
- US-A1- 2003 152 031
- ATARASHI H. ET AL: 'Broadband packet wireless access based on VSF-OFCDM and MC/DS-CDMA' THE 13TH IEEE INTERNATIONAL SYMPOSIUM ON PERSONAL, INDOOR AND MOBILE RADIO COMMUNICATIONS vol. 3, 15 September 2002 - 18 September 2002, pages 992 - 997, XP010611411
- ATARASHI H ET AL: "Broadband packet wireless access based on VSF-OFCDM and MC/DS-CDMA", PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 3, 15 September 2002 (2002-09-15), pages 992-997, XP010611411, ISBN: 978-0-7803-7589-5

## Description

### Technical Field

The present invention relates to an uplink packet transmission method in a mobile communication system, and more particularly, to a method of performing uplink packet transmission in a mobile station communicating with at least two base stations generating ACK/NACK signals according to a hybrid automatic repeat request (HARQ) scheme.

### Background Art

Hybrid automatic repeat request (HARQ) scheme applies channel coding to an automatic repeat request (ARQ) scheme. In ARQ scheme, a transmitting end transmits packet to a receiving end, and receives an acknowledgement (ACK) or negative acknowledgement (NACK) according to status of receiving and decoding in the receiving end.

Therefore, in a mobile communication system supporting a HARQ scheme, the receiving end, e.g., a base station, generates the ACK/NACK signal to indicate a packet transmission acknowledgment status based on the reception and decoding status of a corresponding packet, so that the transmitting end, e.g., a mobile station or user equipment (UE), is conditionally informed of the need to retransmit reverse traffic data. That is, the base station transmits an ACK signal if retransmission is unnecessary, i.e., when the transmitted signal is successfully received and decoded, and transmits a NACK signal if retransmission is necessary, i.e., when the transmitted signal is unsuccessfully received or decoded.

A HARQ system stores a previously received packet in which decoding has failed, combines the stored packet with a retransmission packet which is retransmitted in response to a NACK signal, and then performs an additional decoding operation on the combined resultant. In doing so, diversity gain and coding gain can be increased over a system. In addition, while the HARQ system uses physical layer signaling in transmitting an ACK/NACK signal and therefore exhibits minimal transmission delay, the ARQ system suffers from higher transmission delay times since ACK/NACK signals are transmitted by upper layer signaling.

HARQ is also applicable to a case of uplink packet transmission as well as downlink packet transmission. When a user equipment (UE) communicates with several base stations, such as in a soft handover condition, base station decides a presence or non-presence of error occurrence for a transmitted packet and then transmits a downlink ACK/NACK signal. In doing so, if each of the base stations transmits the ACK/NACK signal to the user equipment, the user equipment detects the ACK/NACK signal for each of the base stations.

The user equipment determines ACK or NACK for each of the base stations respectively, but uplink power control is performed with the combined power from all of the base stations. Therefore, each downlink reception power or signal to Interference ratio (SIR) may vary unstably, and the transmitting power for ACK/NACK signals needs high value excessively.

US 2003/152031 A1 discloses a procedure for packet retransmission handling in mobile communication systems in soft handover. The mobile station transmits a packet and, then, starts a retransmission timer and determines if an acknowledgement has been received from any base station. If so, in assumption that the network can determine the correct packet in all base stations, even though not all of the base stations have sent an acknowledgement, the mobile station proceeds for a new packet. If an acknowledgement has not yet been received from any base station, the mobile station determines whether the retransmission timer has expired. If not, the mobile station detects whether any negative acknowledgements have been received. If a negative acknowledgement has been received, the mobile station determines whether negative acknowledgements have been received from all of the base station or from a selected number of them. If not, the mobile station determines whether an acknowledgement has been received from any base station. If so, the mobile station retransmits the packet. If the mobile station determines that the retransmission timer has expired, the mobile station retransmits the packet directly.

According to US 2003/152031 A1, it is not necessary for the mobile station to wait for acknowledgements from all of the base stations before proceeding for a new packet. In the event that one or more of the base stations may have received the transmission correctly while others may not have, the transmission of data is not delayed by further (repeat) transmissions. The mobile station deals with the situation by assuming that if an acknowledgement is received from one base station then the network can take care of any problems in reception in all of the base stations in the active set. Only if none or only if a selected number of the base stations have received the transmission correctly, a requirement for retransmission is given.

EP 1 326 361 A1 refers to a method to construct and detect a binary transmit signal. The method is based on the assumption that certain decision errors are less severe than other decision errors, as e.g. in transmission schemes employing ARQ. To this purpose, the important information (e.g. the acknowledgement ACK) is transmitted with high power, whereas the less important information (e.g. the non-acknowledgement NACK) is transmitted with reduced power. The decision threshold to decide at the receiver, which of the two signals was transmitted, is chosen such that the reliability of a detected ACK signal is higher than that of a detected NACK signal. The threshold power level and the transmission power levels for ACK and NACK signals are relative powers to a reference transmission power of the radio channel between the receiver and the transmitter. And, the reference transmission power of the radio channel is floating according to the channel condition. Hence, the power levels are preferably expressed in the unit of dB. The threshold power level is set by higher layers.

According to WO 02/47317 A1, when sending data in uplink direction, at the UE, HL PDUs are segmented and concatenated into lower layer PDUs. The UE sends the LL PDUs to all of the BSs of the SHO link set. These BSs identify the correctly and incorrectly received PDUs (as well as missing PDUs), and return appropriate ARQ status messages to the UE. In the event that the UE receives conflicting ARQ status messages from the BSs, there are two ways in which the UE may proceed in order to avoid a protocol deadlock from arising.

Firstly, according to WO 02/47317 A1, the UE may select one of the BS links and retransmit packets according to the ARQ status message received on that link. This selection remains until the BS in question has received a complete LL SDU, whereupon the UE sends an ARQ status message in order to clear the RX buffers at the other BSs of the link set. The link selected may be the link requiring the least resources (i. e. least UL energy) to successfully transmit a LL SDU.

Secondly, according to WO 02/47317 A1, the UE may only retransmit packets which have not been received by any of the BSs. One of the BSs of the link set is designated as the "master", whilst the other nodes are designated as slaves. Each of the slave BSs sends received retransmitted packets and forwards these to the master BS over the Iur+ interface. Once the master BS has a complete SDU, the SDU is passed to the higher layers at the master BS.

Atarashi H. et al: 'Broadband packet wireless access based on VSF-OFCDM and MC/DS-CDMA' the 13th IEEE International Symposium on Personal, Indoor and Mobile Radio Communications, vol. 3, 15 September 2002 - 18 September 2002, pages 992 - 997, XP010611411, proposes broadband packet wireless access employing Variable Spreading Factor-Orthogonal Frequency and Code Division Multiplexing (VSF-OFCDM) with two-dimensional spreading that prioritizes time domain spreading in the forward link and Multi-carrier/DS-CDMA (MS/DS-CDMA) in the reverse link for the system beyond IMT-2000. In D4, in the reverse link, that is s the link from a mobile user to a fixed base station and that employs MS/DS-CDMA wireless access, a very low rate turbo coding, such as R = 1/8, coupled with a user-specific scrambling code is applied.

### Disclosure of Invention

Accordingly, the present invention is directed to an uplink packet transmission method in a mobile communication system that substantially obviates one or more problems due to limitations and disadvantages of the related art.

An object of the present invention is to provide a method of performing packet transmission using a HARQ scheme, in which a mobile station communicating with at least two base stations receives feedback information indicating a decoding success or failure of an uplink packet, to determine an ACK or NACK condition for controlling further packet transmission.

An object of the present invention is to provide a method of performing packet transmission using a HARQ scheme, which minimizes the number or rate of false ACK signal detections when discontinuous transmission (DTX) is used to indicate a NACK condition, so that a threshold can be lowered to enable a reduction in ACK/NACK transmission signal power.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

Objects of the present invention are achieved by subject matter of independent claim.

According to an embodiment of the present invention, there is provided a method of transmitting a packet from a mobile station. The method comprises receiving, from the N base stations, ACK/NACK signals indicating transmission acknowledgement status for an uplink packet; and transmitting a new packet or a retransmission packet according to the number of ACK signals.

Preferably, the number of ACK signals is less than a predetermined value, the retransmission packet is transmitted.

In another aspect of the present invention, there is provided a method of transmitting a packet from a mobile station. The method comprises receiving, from the N base stations, ACK/NACK signals indicating transmission acknowledgement status for an uplink packet; measuring an ACK/NACK reception level from each of the N base stations; selecting at least a base station among the N base stations according to the measured ACK/NACK reception level; and transmitting a new packet or a retransmission packet according to the number of the base station(s) transmitted ACK signal among the selected base stations.

In another aspect of the present invention, there is provided a method of transmitting a packet from a mobile station. The method comprises receiving, from the N base stations, ACK/NACK signals indicating transmission acknowledgement status for an uplink packet; measuring an ACK/NACK reception level from each of the N base stations; selecting at least a base station comparing the reception level of each N base station with a threshold; and transmitting a new packet or a retransmitting packet according to the number of the base stations transmitted ACK signal among the selected base stations.

In another aspect of the present invention, there is provided a method of transmitting a packet from a mobile station. The method comprises receiving, from the N base stations, ACK/NACK signals indicating transmission acknowledgement status for an uplink packet; measuring an ACK/NACK reception level from each of the N base stations; determining whether at least a base station from which the reception level is greater than or equal to a threshold; and transmitting a retransmitting packet when the reception level of all base stations below the threshold.

In another aspect of the present invention, there is provided a method of transmitting a packet from a mobile station. The method comprises determining ACK/NACK status of at least one base station for an uplink packet, based on reception level from each of at least one station; and transmitting a packet according to the number of ACK status.

It is to be understood that both the foregoing general description and the following detailed description of the present invention are exemplary and explanatory and are intended to provide further explanation of the invention as claimed.

### Brief Discription of Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram of a conditional transmission of ACK/NACK signals;
FIG. 2 is a diagram of a conditional transmission of ACK/NACK using a discontinuous transmission technique;
FIG. 3 is a diagram of a conditional transmission of ACK/NACK using a discontinuous transmission technique including NACK signal transmission;
FIG. 4 is a flowchart of a packet transmission method according to a first embodiment of the present invention;
FIG. 5 is a flowchart of a packet transmission method according to a second embodiment of the present invention; and
FIG. 6 is a flowchart of a packet transmission method according to a third embodiment of the present invention.

### Best Mode for Carrying Out the Invention

Reference will now be made in detail to the preferred embodiments of the present invention, examples of which are illustrated in the accompanying drawings. Wherever possible, like reference numbers will be used throughout the drawings to refer to the same or similar parts.

When transmitting uplink packet data via an enhanced dedicated channel in a mobile communications 3GPP standard system using HARQ scheme, a UE in soft handover may, for a single uplink transmission packet, receive different ACK/NACK signals from a plurality of base stations. Meanwhile, it should be appreciated that in performing soft handover with a plurality of base stations, a single UE simultaneously transmits a specific uplink packet to base stations and receives a corresponding ACK or NACK signal from each base station, which generates the downlink ACK or NACK signal to the UE according to decoding results. That is, in transmitting an uplink packet to one of the base stations, an independent ACK or NACK signal is generated.

In a HARQ scheme, a reception error for the transmitted ACK/NACK signal may occur in either of two conditions. The UE may recognize an ACK signal as a NACK signal or recognize a NACK signal as an ACK signal. The first case results in an unnecessary retransmission but causes little problem other than a slight waste of radio resources. On the other hand, the UE may recognize a NACK signal as an ACK signal, which is a more serious problem since the UE would then delete from a buffer the previously transmitted packet and proceed directly with a transmission of the next (new) packet. Thus, while a false NACK results in a mere system redundancy, a false ACK results in packet loss. Though packet loss is recoverable, there are delays in transmission and reception since a higher layer of the network is required. Therefore, a stable reception of NACK signals is more important than that of ACK signals.

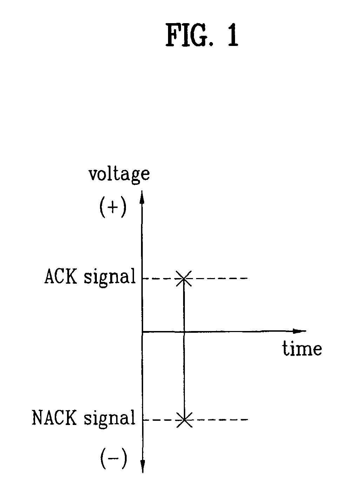

Referring to FIG. 1, both ACK and NACK signals are transmitted via binary phase-shift-keying (BPSK) modulation. A base station transmits a downlink ACK signal if an uplink packet is successfully received and decoded. And, the base station transmits a downlink NACK signal if the uplink packet is unsuccessfully received and decoded. Here, it should be noted that NACK signal transmission power is higher than ACK signal transmission power, since, as demonstrated above, the stable reception of NACK signals is more important than that of ACK signals.

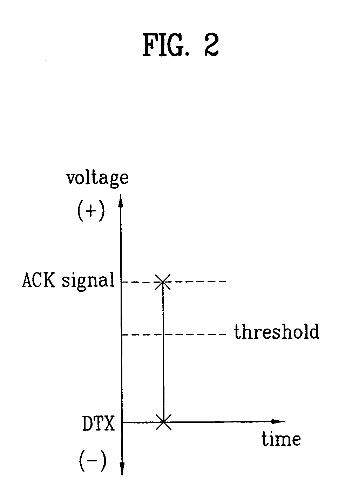

Referring to FIG. 2, the information indicating NACK is transmitted using a discontinuous transmission (DTX) technique. Here, a base station transmits a downlink ACK signal if an uplink packet is successfully received and decoded but transmits no downlink NACK

signal even if there is a failure in packet reception or the decoding of a received packet. When communicating with a base station using such a technique, a UE employs a specific filter, which is matched to the ACK signal. At a point of time when ACK/NACK feedback is anticipated, if output of the filter exceeds a predetermined threshold, the UE determines a ACK condition.

For output levels less than the threshold, the UE determines a NACK condition. The threshold is set according to NACK decision reliability requirements and is increased for higher reliability requirement, in which case ACK transmission power is also raised to meet the corresponding requirements for an ACK decision.

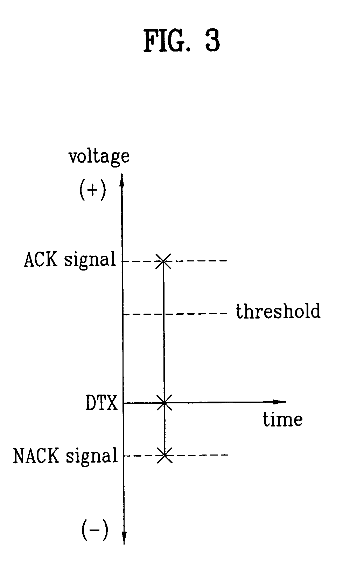

Referring to FIG. 3, illustrating yet another type of conditional transmission of ACK/NACK information, a base station applies the DTX technique when failing to receive a packet but transmits a NACK signal when failing to decode a received packet. That is, a base station transmits a downlink ACK signal if an uplink packet is successfully received and decoded, transmits a downlink NACK signal if the uplink packet is successfully received but unsuccessfully decoded, and applies discontinuous transmission (i.e., transmits no downlink ACK or NACK signal) in cases where there is no recognition of the presence of a received uplink packet. As in the case of the conditional transmission explained with reference to FIG. 2, the UE determines an ACK condition based on the output of the specific filter compared to a predetermined threshold for determining an ACK or NACK condition, determining a NACK condition for output levels less than the threshold. Here, too, the threshold is set according to NACK decision reliability requirements and is increased for higher reliability requirement, in which case ACK transmission power is also raised to meet the corresponding requirements for an ACK decision.

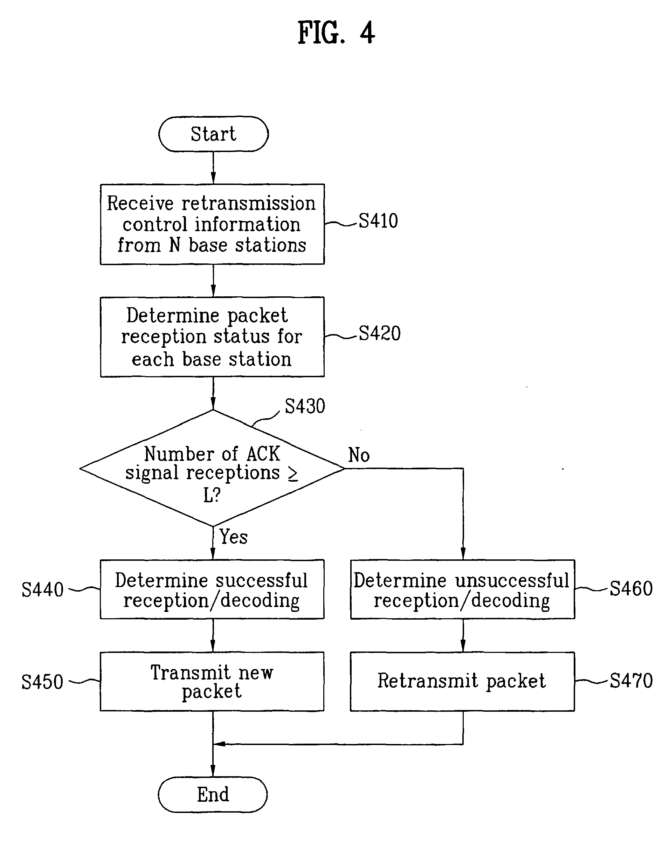

Referring to FIG. 4, illustrating a packet transmission method according to a first embodiment of the present invention, it is assumed that a UE in soft handover has transmitted a specific packet while in communication with more than one base station. In response to such transmission, the UE receives downlink ACK or NACK signals, from a plurality N of base stations (S410), determines a packet reception status for each base station (S420), and counts the ACK signals. That is, the UE decides whether the receiving signal, transmitted according to the reception status of each base station, is to be processed as an ACK signal or a NACK signal and then counts the signals determined to be an ACK signal. The counted number is then compared to a predetermined value L (S430), and if the count meets or exceeds the value of L, the UE determines that the transmitted packet has been successfully decoded by the corresponding base station (S440) and then transmits a new uplink packet (S450). On the other hand, if the count is less than the value of L, the UE determines that the corresponding base station has unsuccessfully decoded the transmitted packet (S460) and then retransmits the packet (S470).

Assuming for instance that the value of L is set to "1" (L=1), if the UE determines that the receiving signal from any one of the bases stations is an ACK signal, it is determined that the transmitted packet has been successfully decoded, in which case the UE transmits a new packet. Conversely, if the UE determines that there is no ACK signal received from any of the bases stations, it is determined that the transmitted packet has been unsuccessfully decoded, in which case the UE retransmits the corresponding packet.

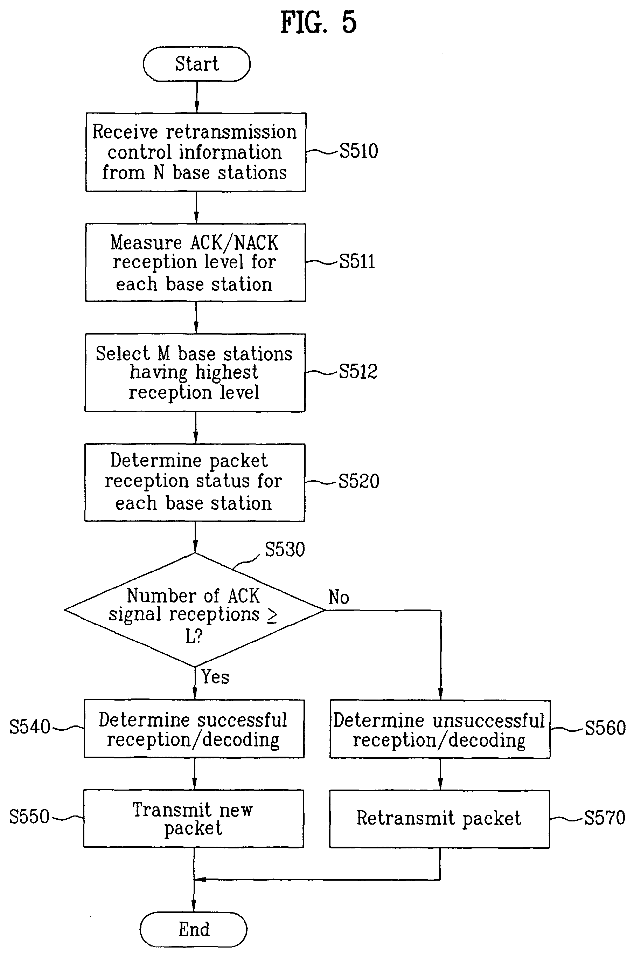

Referring to FIG. 5, illustrating a packet transmission method according to a second embodiment of the present invention, it is similarly assumed that a UE in soft handover has transmitted a specific packet while in communication with more than one base station. In response to such transmission, the UE receives downlink ACK or NACK signals, from a plurality N of base stations (S510). In this embodiment, the UE measures the downlink ACK/NACK reception level, i.e., power level or signal to interference (SIR) from each of the N base stations (S511), selects M base stations having the highest reception level, i.e., power level or SIR, among the N base stations (S512), determines a packet reception status for each selected base station (S520), and counts the ACK signals according to the selection. That is, the UE decides whether the receiving signal, transmitted according to the reception status of each base station, is to be processed as an ACK signal or a NACK signal and then counts the signals determined to be an ACK signal. Thereafter, as in the case of the first embodiment, the counted number is then compared to a predetermined value L (S530), and if the count meets or exceeds the value of L, the UE determines that the transmitted packet has been successfully decoded by the corresponding base station (S540) and then transmits a new uplink packet (S550); if the count is less than the value of L, the UE determines that the corresponding base station has unsuccessfully decoded the transmitted packet (S560) and then retransmits the same packet (S570).

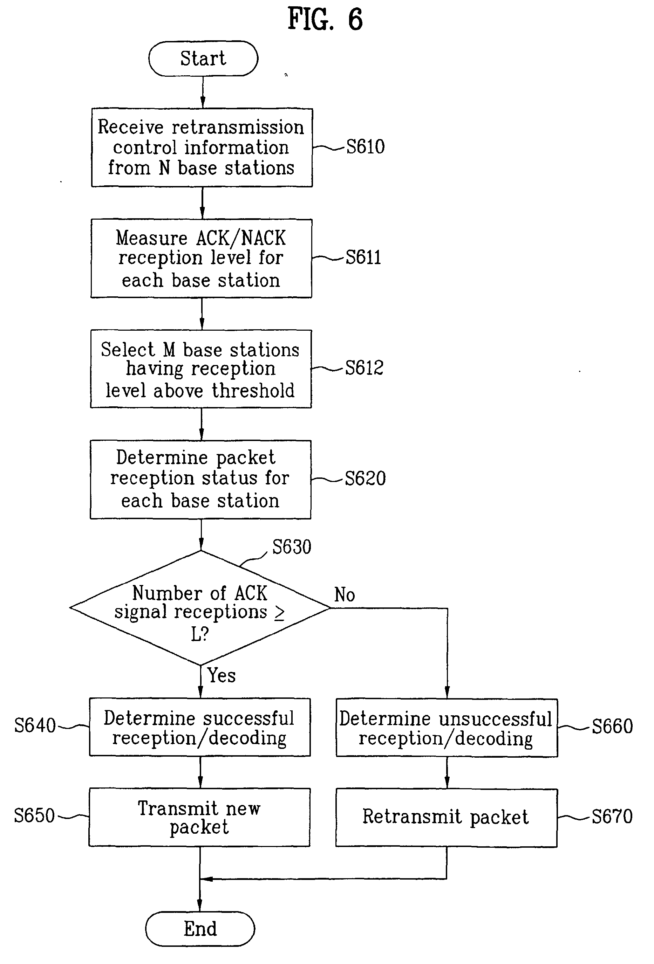

Referring to FIG. 6, illustrating a packet transmission method according to a third embodiment of the present invention, it is again assumed that a UE in soft handover has transmitted a specific packet while in communication with more than one base station. In response to such transmission, the UE receives downlink ACK or NACK signals, from a plurality N of base stations (S610), measures the downlink ACK/NACK reception level, i.e., power level or Signal to Interference Ratio (SIR) from each of the N base stations (S611), selects M base stations, preferably all base stations, from which the reception level, i.e., power level or SIR, has a level greater than or equal to the threshold among all N base stations (S612), determines a packet reception status for each selected base station (S620), and counts the ACK signals according to the selection. In this embodiment, however, the measured ACK/NACK reception level, i.e., power levels or SIRs are compared to a threshold, those having an ACK/NACK reception level below the threshold are excluded, such that the counted number of ACK signals directly corresponds to the base stations from which an ACK signal is received at a level greater than or equal to the threshold. Thereafter, as in the case of the first and second embodiments, the counted number is then compared to a predetermined value L (S630), and if the count meets or exceeds the value of L, the UE determines that the transmitted packet has been successfully decoded by the corresponding base station (S640) and then transmits a new uplink packet (S650); if the count is less than the value of L, the UE determines that the corresponding base station has unsuccessfully decoded the transmitted packet (S660) and then retransmits the same packet (S670).

In the method of the present invention according to each of the first to third embodiments (FIGS. 4-6), the predetermined value L may be transmitted to the UE from the network via upper layer signaling, may be reached by a negotiation between the network and the UE, or may be stored in the UE in advance, for example, using a lookup table or the like, before performing the step S450 or S470. In the embodiment of FIG. 6, the threshold value for determining M may be made similarly available in or provided to the UE for a timely comparison with the measured ACK/NACK reception power.

By adopting the above-described packet transmission method in a mobile station (UE) of a 3GPP standard communications system using a HARQ scheme, the UE communicating with a plurality of base stations transmitting an ACK/NACK feedback signal, can lower a threshold for determining a packet transmission acknowledgment status, that is, whether a received ACK/NACK feedback signal is an ACK signal or a NACK signal, to reduce status determination errors and thereby enable a decrease in transmission power for the ACK/NACK feedback signals. In particular, in performing a DTX operation upon a NACK condition as in FIG. 2 or in failing to receive a packet in a system applying discontinuous transmission as in FIG 3, the method of the present invention minimizes the number or rate of false ACK signal detections when discontinuous transmission is used to indicate a NACK condition, so that a threshold can be lowered to enable a reduction in ACK/NACK transmission signal power.

It will be apparent to those skilled in the art that various modifications and variations can be made in the present invention. Thus, it is intended that the present invention covers the modifications and variations of this invention provided they come within the scope of the appended claims and their equivalents.

## Claims

1. A method of transmitting a packet from a mobile station, the method comprising:
receiving (S510), from N base stations, ACK/NACK signals indicating transmission acknowledgement status for an uplink packet,
**characterized in that** the method further comprises
measuring (S511) an ACK/NACK reception level from each of the N base stations;
selecting (S512) M base stations which have the highest ACK/NACK reception level among the N base stations;
determining (S520), for each of the selected M base stations, whether the ACK/NACK signal received from the corresponding base station is an ACK signal;
counting a number of signals that have been determined as ACK signals;
comparing (S530) the counted number with a predetermined value;
transmitting (S550) a new uplink packet if the counted number meets or exceeds the predetermined value; and
retransmitting (S570) the uplink packet if the counted number is less than the predetermined value;
wherein the reception level is a signal to interference ratio, SIR, level, and
wherein the predetermined value is received from a network via upper layer signalling.

2. The method as claimed in claim 1, wherein the determining (S520) whether the ACK/NACK signal received from the corresponding base station is an ACK signal is performed by use of a reception voltage level and a reception polarity of ACK/NACK signal.

3. The method as claimed in claim 2, wherein the reception voltage level for NACK is higher than the reception voltage level for ACK.

4. The method as claimed in claim 1, wherein the ACK/NACK signal received from the corresponding base station is determined as a NACK signal when the reception voltage level is below a threshold.

5. The method as claimed in claim 4, wherein the reception voltage is detected using a filter in the mobile station, at a point when a reception of the ACK/NACK signal is anticipated.

6. The method as claimed in claim 1, wherein the mobile station is in soft handover.

## Patentansprüche

1. Verfahren zum Übertragen eines Pakets von einer Mobilstation, wobei das Verfahren aufweist:
Empfangen (S510) von ACK/NACK Signalen von N Basisstationen, die einen Übermittlungs-Bestätigungs-Status für ein Uplink-Paket anzeigen,
**dadurch gekennzeichnet, dass** das Verfahren ferner aufweist:
Messen (S511) eines ACK/NACK-Empfangspegels von jeder der N Basisstationen;
Auswählen (S512) von M Basisstationen, die unter den N Basisstationen den höchsten ACK/NACK Empfangspegel haben;
Bestimmen (S520) für jede der ausgewählten M Basisstationen, ob das ACK/NACK Signal, das von der jeweiligen Basisstation empfangen wird, ein ACK Signal ist;
Zählen einer Anzahl von Signalen, die als ACK Signale bestimmt worden sind;
Vergleichen (S530) der gezählten Anzahl mit einem vorbestimmten Wert;
Übertragen (S550) eines neuen Uplink-Pakets, wenn die gezählte Anzahl mit dem vorbestimmten Wert übereinstimmt oder diesen übersteigt; und
Rückübermitteln (S570) des Uplink-Pakets, wenn die gezählte Anzahl geringer ist als der vorbestimmte Wert;
wobei der Empfangspegel ein Signal-Rausch-Verhältnis, SIR, Pegel ist, und
wobei der vorbestimmte Wert von einem Netzwerk über eine obere Schichtsignalisierung empfangen wird.

2. Verfahren gemäß Anspruch 1, wobei das Bestimmen (S520), ob das ACK/NACK Signal, das von der entsprechenden Basisstation empfangen wird, ein ACK Signal ist, durch die Verwendung eines Empfangsspannungspegels und einer Empfangspolarität des ACK/NACK Signals ausgeführt wird.

3. Verfahren gemäß Anspruch 2, wobei der Empfangsspannungspegel für NACK höher ist als der Empfangsspannungspegel für ACK.

4. Verfahren gemäß Anspruch 1, wobei das ACK/NACK Signal, das von der entsprechenden Basisstation empfangen wird, als NACK Signal bestimmt wird, wenn der Empfangsspannungspegel unter einem Grenzwert ist.

5. Verfahren gemäß Anspruch 4, wobei die Empfangsspannung durch Verwenden eines Filters in der Mobilstation, zu einem Zeitpunkt wenn ein Empfang des ACK/NACK Signals erwartet wird, erfasst wird.

6. Verfahren gemäß Anspruch 1, wobei sich die Mobilstation in weicher Verbindungsübergabe (Soft Handover) befindet.

## Revendications

1. Procédé de transmission d'un paquet à partir d'une station mobile, le procédé comprenant :
la réception (S510), à partir de N stations de base, de signaux ACK/NACK indiquant un statut d'accusé de réception de transmission pour un paquet de liaison montante,
**caractérisé en ce que** le procédé comprend en outre :
la mesure (S511) d'un niveau de réception ACK/NACK à partir de chacune des N stations de base ;
la sélection (S512) de M stations de base ayant le plus haut niveau de réception ACK/NACK parmi les N stations de base ;
la détermination (S520), pour chacune des M stations de base sélectionnées, si le signal ACK/NACK reçu à partir de la station de base correspondante est un signal ACK ;
le comptage d'un nombre de signaux ayant été déterminés comme étant des signaux ACK ;
la comparaison (S530) du nombre compté à une valeur prédéterminée ;
la transmission (S550) d'un nouveau paquet de liaison montante si le nombre compté est supérieur ou égal à la valeur prédéterminée ; et
la retransmission (S570) du paquet de liaison mondante si le nombre compté est inférieur à la valeur prédéterminée ;
dans lequel le niveau de réception est un niveau de rapport de signal sur interférence, SIR, et
dans lequel la valeur prédéterminée est reçue à partir d'un réseau par l'intermédiaire d'une signalisation de couche supérieure.

2. Procédé selon la revendication 1, dans lequel la détermination (S520) si le signal ACK/NACK reçu à partir de la station de base correspondante est un signal ACK est effectuée en utilisant un niveau de tension de réception et une polarité de réception du signal ACK/NACK.

3. Procédé selon la revendication 2, dans lequel le niveau de tension de réception pour NACK est supérieur au niveau de tension de réception pour ACK.

4. Procédé selon la revendication 1, dans lequel le signal ACK/NACK reçu à partir de la station de base correspondante est déterminé comme étant un signal NACK lorsque le niveau de tension de réception est inférieur à un seuil.

5. Procédé selon la revendication 4, dans lequel la tension de réception est détectée en utilisant un filtre dans la station mobile, à un point quand une réception du signal ACK/NACK est anticipée.

6. Procédé selon la revendication 1, dans lequel la station mobile est en transfert intercellulaire.
